# EUROPEAN PATENT APPLICATION

(11) **EP 4 821 969 A1**
(43) Date of publication of application: **14.10.2026**
(21) Application number: 25908828.4
(22) Date of filing: 15.12.2025
(51) Int. Cl.: C08J 3/24, C08J 3/12, C08J 9/20, C08F 220/06, C08K 5/00, C08K 5/1515, C08K 5/372

(54) **METHOD FOR PREPARING SUPER ABSORBENT POLYMER**

(30) Priority: 19.12.2024 KR 20240191808; 19.12.2024 KR 20240191809; 12.12.2025 KR 20250198140
(71) Applicant: LG Chem, Ltd., Seoul 07336 (KR)
(72) Inventor: KIM, Jae Soon, Daejeon 34122 (KR); NAM, Hyemi, Daejeon 34122 (KR); SHIN, Kwangin, Daejeon 34122 (KR); LEE, Hyemin, Daejeon 34122 (KR)
(74) Representative: Goddar, Heinz J.
(86) International application number: PCT/KR2025/021657
(87) International publication number: WO 2026/135061

(57) **Abstract**

The present invention relates to a method for preparing a superabsorbent polymer. More specifically, the present invention relates to a method for preparing a superabsorbent polymer that can further improve process stability in a subsequent coarse pulverization process and drying efficiency by including a specific thermally decomposable internal crosslinking agent in a polymerization step, and accordingly, can produce a superabsorbent polymer having excellent absorption properties.

## Description

### [Technical Field]

### Cross-reference to Related Application(s)

This application claims the benefit of priority based on Korean Patent Application No. 10-2024-0191808 filed on December 19, 2024, Korean Patent Application No. 10-2024-0191809 filed on December 19, 2024, and Korean Patent Application No. 10-2025-0198140 filed on December 12, 2025, and all contents disclosed in the documents of the corresponding Korean Patent Applications are incorporated herein by reference.

The present invention relates to a method for preparing a superabsorbent polymer. More specifically, the present invention relates to a method for preparing a superabsorbent polymer, which can further improve process stability in a subsequent coarse pulverization process and drying efficiency by including a specific thermally decomposable internal crosslinking agent in a polymerization step, and accordingly, can produce a superabsorbent polymer having excellent absorption properties.

### [Background Art]

Superabsorbent polymer (SAP) is a synthetic polymer material having a function of absorbing moisture about 500 to 1,000 times its own weight, and is referred to by different names such as SAM (Super Absorbency Material) and AGM (Absorbent Gel Material) depending on the developer. As described above, such superabsorbent polymers began to be commercialized as sanitary napkins and are now widely used as materials for hygiene products such as disposable diapers for children, as well as soil-moisture-retaining agents for horticulture, water-stopping materials for civil engineering and construction, seedling sheets, freshness-preserving agents in the food distribution field, and hot/cold compresses or the like.

In most cases, such superabsorbent polymers are widely used in the field of sanitary materials such as diapers or sanitary napkins, and for such applications, it is necessary to exhibit high absorption capacity for moisture and the like, and excellent absorbency under load (AUL) performance or the like, in which the absorbed moisture does not leak out even under external pressure.

In addition, when the superabsorbent polymer is included in a hygiene material such as a diaper, it is necessary to diffuse urine or the like as widely as possible even in an environment where pressure is applied by the weight of a user. Through this, the absorption performance and absorption rate of the hygiene material can be further improved by utilizing the superabsorbent polymer particles included in the entire area of the absorbent layer of the hygiene material as a whole. In addition, due to such diffusion characteristics under pressure, it is possible to further improve the rewet property of the diaper, which suppresses urine or the like, once absorbed into the superabsorbent polymer, from leaking out again, and along with this, it is possible to improve the leakage suppression property of the diaper.

Previously, attempts have been made to improve the characteristics of widely diffusing the said urine or the like by changing the design of the hygiene material itself, such as a diaper. For example, measures for improving the diffusion characteristics of the said urine or the like by introducing an ADL (Acquisition Distribution Layer) or the like into the hygiene material, or by a method of utilizing an absorption channel or the like, have been attempted.

However, the improvement of diffusion characteristics due to such a change in the design of the hygiene material itself was not sufficient. Furthermore, recently, as hygiene materials have become thinner and the content of superabsorbent polymer in the hygiene material has relatively increased, the improvement of diffusion characteristics by changing the design of the hygiene material itself has reached its limit, and there is an increasing need to improve the diffusion characteristics under pressure of the superabsorbent polymer itself.

### [Detailed Description of the present invention]

### [Technical Problem]

The present invention provides a method for manufacturing a superabsorbent polymer, which can further improve process stability in a subsequent coarse pulverizing process and drying efficiency in a drying process by including a specific thermally decomposable internal crosslinking agent in a polymerization step, thereby providing excellent centrifuge retention capacity and absorbency under load, and at the same time, and a fast absorption rate.

### [Technical Solution]

To solve the above-described problems, the present invention provides a method for preparing a superabsorbent polymer, comprising:
forming a hydrogel polymer by polymerizing a monomer mixture comprising an acrylic acid-based monomer having acidic groups at least partially neutralized and a thermally decomposable internal crosslinking agent;
forming base resin particles by coarsely pulverizing, drying, pulverizing, and classifying the hydrogel polymer; and
crosslinking a part of the surface of the base resin particles by heat-treating the base resin particles in the presence of a surface crosslinking agent,
wherein the thermally decomposable internal crosslinking agent is an aliphatic cyclic epoxy-based compound comprising an ester bond within the molecule or an epoxy-based compound comprising a disulfide bond within the molecule.

### [Advantageous Effects]

As described above, by including a specific thermally decomposable internal crosslinking agent in the polymerization step, the present invention provides an appropriate degree of internal crosslinking, thereby ensuring process stability in the subsequent coarse pulverizing process. In addition, since the thermally decomposable internal crosslinking agent is easily decomposed during a drying process, the finally produced superabsorbent polymer can exhibit excellent centrifuge retention capacity and absorbency under load, and can achieve a fast absorption rate.

### [Brief Description of Drawings]

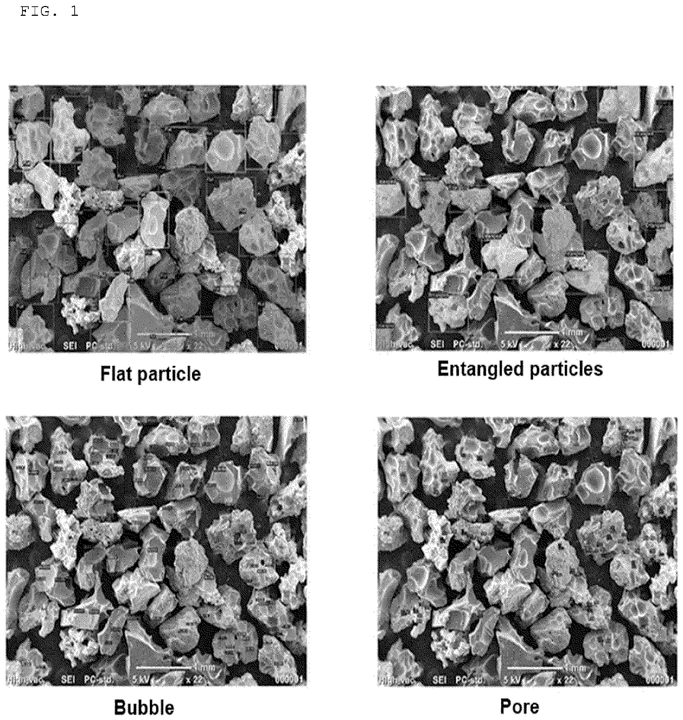

FIG. 1 shows classification criteria for pore distribution analysis for base resin particles manufactured in Examples and Comparative Examples.

### [Embodiments of the present invention]

The terms used herein are used only to describe exemplary embodiments and are not intended to limit the present invention.

The singular expression includes the plural expression unless the context clearly indicates otherwise. In the present specification, terms such as "comprise", "include", or "have" are intended to designate that the stated features, steps, components, or combinations thereof exist, and it should be understood that the possibility of presence or addition of one or more other features, steps, components, or combinations thereof is not excluded in advance.

Terms such as first, second, third, and the like are used to describe various components, and these terms are used only for the purpose of distinguishing one component from another.

The term "resin" or "polymer" as used herein means that water-soluble ethylenically unsaturated monomers are in a polymerized state, and may encompass all moisture content ranges or particle size ranges. Among the polymers, a polymer in a state after polymerization and before drying, having a moisture content (water content) of about 40% by weight or more, may be referred to as a hydrogel polymer, and particles obtained by pulverizing and drying such a hydrogel polymer may be referred to as a crosslinked polymer.

In addition, the term "base resin" or "base resin particles" refers to a polymer in the form of particles or powder prepared by drying and pulverizing a polymer obtained by polymerizing acrylic acid-based monomers, and means a polymer in a state in which a surface modification or surface crosslinking step to be described later has not been performed.

In addition, the term "superabsorbent polymer" or "superabsorbent polymer particle" is used, depending on the context, to mean a base resin in the form of powder consisting of a crosslinked polymer in which water-soluble ethylenically unsaturated monomers (acrylic acid-based monomers) containing acidic groups, at least a portion of which are neutralized, are polymerized, or superabsorbent polymer particles in which the crosslinked polymer is pulverized; or to encompass all of those brought into a state suitable for commercialization by undergoing additional processes, such as surface crosslinking, fines re-assembly, drying, pulverizing, or classifying, with respect to the crosslinked polymer or the base resin.

As the present invention is subject to various modifications and may have various forms, specific embodiments will be illustrated and described in detail below. However, this is not intended to limit the present invention to the particular forms disclosed, and it should be understood to include all modifications, equivalents, and substitutes falling within the spirit and technical scope of the present invention.

Hereinafter, a method for preparing a superabsorbent polymer and a superabsorbent polymer according to specific embodiments of the present invention will be described in more detail.

### (Method for manufacturing a superabsorbent polymer)

A method for manufacturing a superabsorbent polymer according to an embodiment of the present invention comprises: a step of forming a hydrogel polymer by polymerizing a monomer mixture comprising an acrylic acid-based monomer having acidic groups at least partially neutralized and a thermally decomposable internal crosslinking agent; a step of forming base resin particles by coarse pulverizing, drying, pulverizing, and classifying the hydrogel polymer; and a step of crosslinking a part of the surface of the base resin particles by heat treating the base resin particles in the presence of a surface crosslinking agent, wherein the thermally decomposable internal crosslinking agent is an aliphatic cyclic epoxy-based compound comprising an ester bond within the molecule or an epoxy-based compound comprising a disulfide bond within the molecule.

Superabsorbent polymers are widely used in the field of sanitary materials such as diapers or sanitary napkins, and there is a need to exhibit high absorption capacity for moisture and the like according to the requirements of such products, excellent absorbency under load in which absorbed moisture does not leak out even under external pressure, and a fast absorption rate for improving the wearing comfort of a user.

In order to improve the absorption properties, a method has been proposed in which polymerization is performed by reducing the content of an internal crosslinking agent during the manufacture of a superabsorbent polymer, and a hydrogel polymer is coarsely pulverized to have a small particle size by more finely controlling the hole size of a chopper in a coarse pulverization process after the polymerization. However, although the absorption rate can be improved when the hole size is reduced in the coarse pulverization process, there is a problem in that process stability is deteriorated due to an increase in the load on the chopper in the coarse pulverization process itself. In particular, when the content of the internal crosslinking agent is reduced, the internal crosslinking density of the polymer is insufficient, so the polymer is crushed in the coarse pulverization process and its tackiness increases, which prevents the subsequent drying process from being uniformly performed and leads to a problem that the absorbency under load of the product is rather deteriorated.

The present inventors introduced a thermally decomposable internal crosslinking agent of a specific structure to solve this problem. Specifically, it was confirmed that when a hydrogel polymer is formed by using an aliphatic cyclic epoxy-based compound comprising an ester bond within the molecule or an epoxy-based compound comprising a disulfide bond within the molecule as an internal crosslinking agent, it has a proper internal crosslinking density, so that even if the hole size of the chopper is reduced in the coarse pulverizing process, the load of the chopper does not increase or the absorption properties are not lowered. In addition, the thermally decomposable internal crosslinking agent is easily decomposed in the subsequent drying process, thereby enabling the implementation of excellent centrifuge retention capacity, absorbency under load, and a fast absorption rate.

### (Step 1: Polymerization step)

A method for preparing a superabsorbent polymer according to an embodiment of the present invention comprises a step of forming a hydrogel polymer by polymerizing a monomer mixture comprising an acrylic acid-based monomer having acidic groups at least partially neutralized and a thermally decomposable internal crosslinking agent.

The polymerization step is a step of forming a hydrogel polymer by photopolymerizing and/or thermally polymerizing, in the presence of an internal crosslinking agent, a monomer mixture comprising an acrylic acid-based monomer having acidic groups at least partially neutralized.

In the present invention, by using a thermally decomposable internal crosslinking agent having a specific structure, process stability in a subsequent coarse pulverizing process and drying efficiency of a drying process can be further improved, and a superabsorbent polymer having excellent absorption properties can be manufactured.

First, a monomer mixture comprising an acrylic acid-based monomer having acidic groups at least partially neutralized and an internal crosslinking agent is prepared. The monomer mixture may further include a polymerization initiator for polymerization.

The acrylic acid-based monomer may be any monomer commonly used in the manufacture of superabsorbent polymer. As a non-limiting example, the acrylic acid-based monomer may be a compound represented by the following Chemical Formula 1:

[Chemical Formula 1] R₁-COOM₁

In Chemical Formula 1, R₁ is an alkyl group having 2 to 5 carbon atoms comprising an unsaturated bond, and M₁ is a hydrogen atom, a monovalent or divalent metal, an ammonium group, or an organic amine salt.

Preferably, the acrylic acid-based monomer may be at least one selected from the group consisting of acrylic acid, methacrylic acid, and monovalent metal salts, divalent metal salts, ammonium salts, and organic amine salts of these acids. In this way, when an acrylic acid-based monomer is used, it is advantageous in that a superabsorbent polymer with improved absorbency can be obtained. In addition, as the monomer, at least one selected from the group consisting of anionic monomers such as maleic anhydride, fumaric acid, crotonic acid, itaconic acid, 2-acryloylethanesulfonic acid, 2-methacryloylethanesulfonic acid, 2-(meth)acryloylpropanesulfonic acid, or 2-(meth)acrylamido-2-methylpropanesulfonic acid, and salts thereof; non-ionic hydrophilic group-containing monomers such as (meth)acrylamide, N-substituted (meth)acrylate, 2-hydroxyethyl (meth)acrylate, 2-hydroxypropyl (meth)acrylate, methoxypolyethylene glycol (meth)acrylate or polyethylene glycol (meth)acrylate; and amino group-containing unsaturated monomers such as (N,N)-dimethylaminoethyl (meth)acrylate or (N,N)-dimethylaminopropyl (meth)acrylamide, and quaternized products thereof, may be used.

The acrylic acid-based monomer has an acidic group, and at least a portion of the acidic group is partially neutralized using a neutralizing solution. In this case, as a neutralizing agent included in the neutralizing solution, basic substances such as sodium hydroxide, potassium hydroxide, ammonium hydroxide, and the like, which can neutralize the acidic group, may be used.

In this case, the degree of neutralization of the monomer may be 40 to 95 mol%, 40 to 80 mol%, or 45 to 75 mol%. The range of the degree of neutralization may vary depending on final physical properties, but if the degree of neutralization is excessively high, the neutralized monomer may precipitate, making it difficult for polymerization to proceed smoothly. Conversely, if the degree of neutralization is excessively low, the absorbency of the polymer may significantly decrease, and the polymer may exhibit properties like an elastic rubber that is difficult to handle.

The term "internal crosslinking agent" used in the present specification is a term used to distinguish it from a "surface crosslinking agent" for crosslinking the surface of a base resin, and serves to crosslink the unsaturated bonds of the above-described acrylic acid-based monomers to polymerize them. Crosslinking in this step proceeds without distinction between the surface and the interior, but due to the surface crosslinking process of the base resin to be described later, the particle surface of the finally manufactured superabsorbent polymer has a structure crosslinked by the surface crosslinking agent, and the interior has a structure crosslinked by the internal crosslinking agent.

The thermally decomposable internal crosslinking agent is an aliphatic cyclic epoxy-based compound comprising an ester bond within the molecule or an epoxy-based compound comprising a disulfide bond within the molecule, and at least one ester bond or at least one disulfide bond is included in each molecule.

When manufacturing a polymer using the thermally decomposable internal crosslinking agent, sufficient strength can be achieved through sufficient crosslinking, and accordingly, excellent centrifuge retention capacity and absorbency under load can be realized. Specifically, the ester bond (-COO-) and the disulfide bond (-S-S-) of the thermally decomposable crosslinking agent compound are easily decomposed by heat in the drying step, and the internal crosslinking density is reduced to an appropriate level through hydrolysis, thereby allowing the final superabsorbent polymer to exhibit an excellent absorption rate.

Meanwhile, when an aromatic epoxy-based compound containing an ester bond in its molecule (e.g., diglycidyl phthalate) is used as an internal crosslinking agent, the thermal decomposition effect may be somewhat reduced due to the structural characteristics of the aromatic ring. Also, when an aliphatic linear epoxy-based compound containing an ester bond (e.g., diglycidyl adipate) is used as an internal crosslinking agent, its water solubility in a neutralizing solution is low, so the uniform crosslinking effect may be somewhat reduced. In addition, compared to aliphatic cyclic epoxy-based compounds, both aromatic epoxy-based compounds and aliphatic linear epoxy-based compounds have lower polarity, so even if the same surfactant and organic solvent are added for dissolution in water, a problem of reduced solubility may occur.

The thermally decomposable internal crosslinking agent may be at least one selected from the group consisting of bis(3,4-epoxycyclohexylmethyl)adipate, diglycidyl 1,2-cyclohexanedicarboxylate, 3,4-epoxycyclohexylmethyl-3,4-epoxycyclohexane carboxylate, and bis(4-glycidyloxyphenyl)disulfide, and preferably, bis(4-glycidyloxyphenyl)disulfide or diglycidyl 1,2-cyclohexanedicarboxylate can be used.

The thermally decomposable internal crosslinking agent may be used in an amount of 100 ppmw to 10,000 ppmw based on the weight of the acrylic acid-based monomer. When included in the above content range, strength of an appropriate level or higher can be realized through sufficient crosslinking, and sufficient retention capacity can be realized by the introduction of an appropriate crosslinking structure. Preferably, the agent may be included in an amount of 300 ppmw or more, 500 ppmw or more, 600 ppmw or more, 700 ppmw or more, or 800 ppmw or more; 8,500 ppmw or less or 7,500 ppmw or less; or 500 ppmw to 9,000 ppmw, 500 ppmw to 8,500 ppmw, 500 ppmw to 7,000 ppmw, 500 ppmw to 5,000 ppmw, 500 ppmw to 4,000 ppmw, 500 ppmw to 3,000 ppmw, 500 ppmw to 2,000 ppmw, or 700 ppmw to 2,000 ppmw. If the content of the thermally decomposable internal crosslinking agent is too low, crosslinking may not sufficiently occur, making it difficult to realize strength of an appropriate level or higher. If the content of the thermally decomposable internal crosslinking agent is too high, the internal crosslinking density increases, making it difficult to realize a desired retention capacity. In addition, when included in the above content range, the stability of a subsequent coarse pulverization process and drying efficiency are excellent.

According to an embodiment of the present invention, an additional internal crosslinking agent may be optionally used in addition to the thermally decomposable internal crosslinking agent, and as the additional internal crosslinking agent, a component different from the aforementioned thermally decomposable internal crosslinking agent may be used.

A multifunctional component may be used as the internal crosslinking agent, and for example, at least one selected from the group consisting of N,N'-methylenebisacrylamide, trimethylolpropane tri(meth)acrylate, ethylene glycol di(meth)acrylate, polyethylene glycol (meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, and ethylene carbonate may be used. Preferably, polyethylene glycol di(meth)acrylate and propylene glycol di(meth)acrylate can be used.

The additional internal crosslinking agent may be used in an amount of 100 ppmw to 10,000 ppmw based on the weight of the acrylic acid-based monomer, and when included within the content range, a strength of an appropriate level or higher can be realized through sufficient crosslinking, and a sufficient retention capacity can be realized by the introduction of an appropriate crosslinking structure.

As the polymerization initiator, a thermal polymerization initiator or a photo-polymerization initiator may be used depending on the polymerization method. However, even by the photo-polymerization method, a certain amount of heat is generated by ultraviolet irradiation, etc., and a certain amount of heat is also generated as the polymerization reaction, which is an exothermic reaction, proceeds, so a thermal polymerization initiator may be further included.

Herein, as the photopolymerization initiator, for example, at least one compound selected from the group consisting of benzoin ether, dialkyl acetophenone, hydroxyalkyl ketone, phenyl glyoxylate, benzyl dimethyl ketal, acyl phosphine, and alpha-aminoketone may be used. As a specific example of the acyl phosphine, commercially available Lucirin TPO, that is, 2,4,6-trimethyl-benzoyl-trimethyl phosphine oxide or diphenyl(2,4,6-trimethylbenzoyl)-phosphine oxide, may be used. More diverse photopolymerization initiators are disclosed on page 115 of "UV Coatings: Basics, Recent Developments and New Application (Elsevier 2007)" by Reinhold Schwalm, which may be referred to.

And, as the thermal polymerization initiator, at least one compound selected from the group consisting of persulfate-based initiators, azo-based initiators, hydrogen peroxide, and ascorbic acid may be used. Specifically, examples of the persulfate-based initiators include sodium persulfate (Na₂S₂O₈), potassium persulfate (K₂S₂O₈), ammonium persulfate ((NH₄)₂S₂O₈), and the like. Also, examples of the azo-based initiators include 2,2-azobis(2-amidinopropane) dihydrochloride, 2,2-azobis-(N,N-dimethylene)isobutyramidine dihydrochloride, 2-(carbamoylazo)isobutyronitrile, 2,2-azobis[2-(2-imidazolin-2-yl)propane] dihydrochloride, 4,4-azobis-(4-cyanovaleric acid), and the like. More diverse thermal polymerization initiators are disclosed on page 203 of "Principle of Polymerization (Wiley, 1981)" by Odian, and this can be referred to.

Such a polymerization initiator may be used in an amount of 10 ppmw to 10,000 ppmw based on the weight of the acrylic acid-based monomer. Preferably, it may be included in an amount of 10 ppmw or more, 30 ppmw or more, or 50 ppmw or more, and 10,000 ppmw or less, 5,000 ppmw or less, or 3,000 ppmw or less, or in an amount of 30 ppmw to 5,000 ppmw, 50 ppmw to 3,000 ppmw, or 80 ppmw to 2,500 ppmw. If the concentration of the polymerization initiator is too low, the polymerization rate may become slow and a large amount of residual monomers may be extracted from the final product, which is not preferable. On the contrary, if the concentration of the polymerization initiator is too high, the polymer chains forming the network become short, so that the content of water-soluble components increases and physical properties of the resin may deteriorate, such as a decrease in absorbency under load, which is not preferable. The content of the polymerization initiator refers to the combined content when a photopolymerization initiator and a thermal polymerization initiator are used together.

According to an embodiment of the present invention, a foaming agent may be further included in the polymerization step.

The foaming agent serves to increase the surface area by forming pores in the hydrogel polymer through foaming during polymerization. As the foaming agent, any compound known in the art that can generate bubbles during the polymerization step may be used without limitation; for example, a carbonate-based foaming agent or an encapsulated foaming agent may be used.

A carbonate may be used as the foaming agent, and for example, sodium bicarbonate, sodium carbonate, potassium bicarbonate, potassium carbonate, calcium bicarbonate, calcium carbonate, magnesium bicarbonate, or magnesium carbonate may be used.

In addition, as the encapsulated foaming agent, a thermally expandable microcapsule foaming agent having a core-shell structure may be used. More specifically, the encapsulated foaming agent has a core-shell structure comprising a core containing a hydrocarbon and a shell made of a thermoplastic resin formed on the core. Specifically, the hydrocarbon constituting the core is a liquid hydrocarbon having a low boiling point and is easily vaporized by heat. Therefore, when heat is applied to the encapsulated foaming agent, the thermoplastic resin forming the shell is softened and the liquid hydrocarbon of the core is vaporized at the same time, expanding the capsule as the internal pressure increases, and accordingly, bubbles having an increased size compared to the initial size are formed.

The hydrocarbon constituting the core of the encapsulated foaming agent may be at least one selected from the group consisting of n-propane, n-butane, iso-butane, cyclobutane, n-pentane, iso-pentane, cyclopentane, n-hexane, iso-hexane, cyclohexane, n-heptane, iso-heptane, cycloheptane, n-octane, iso-octane, and cyclooctane. Among these, hydrocarbons having 3 to 5 carbon atoms (n-propane, n-butane, iso-butane, cyclobutane, n-pentane, iso-pentane, cyclopentane) are suitable for forming pores of the above-described size, and iso-butane may be most suitable.

And, the thermoplastic resin constituting the shell of the encapsulated foaming agent may be a polymer formed from one or more monomers selected from the group consisting of (meth)acrylate-based compounds, (meth)acrylonitrile-based compounds, aromatic vinyl compounds, vinyl acetate compounds, and vinyl halide compounds.

In addition, such an encapsulated foaming agent has a structure comprising a core comprising a hydrocarbon and a shell formed of a thermoplastic resin surrounding the core, and may have an average diameter before expansion of 5 to 30 µm and a maximum expansion ratio in air of 5 to 15 times.

In addition, it is preferable to use the foaming agent in an amount of 15,000 ppmw or less based on the weight of the acrylic acid-based monomer. When the amount of the foaming agent used exceeds 15,000 ppmw, too many pores are formed, so the gel strength of the superabsorbent polymer decreases and the density decreases, which may cause problems in distribution and storage. In addition, the foaming agent is preferably used in an amount of 500 ppmw or more, 1,000 ppmw or more, or 5,000 ppmw or more based on the weight of the water-soluble ethylenically unsaturated monomer.

In addition, additives such as surfactants, thickeners, plasticizers, storage stabilizers, foam stabilizers, and antioxidants may be further included in the monomer composition as needed.

The surfactant used in the polymerization step, when used together with a foaming agent, induces uniform dispersion of the foaming agent to prevent a decrease in gel strength or a decrease in density through uniform foaming during foaming. The type of the surfactant is not particularly limited, and components commonly used in the art can be applied without particular limitation.

In addition, it is preferable to use the surfactant in an amount of 300 ppmw or less based on the weight of the acrylic acid-based monomer. In addition, the surfactant is preferably used in an amount of 100 ppmw or more, or 150 ppmw or more based on the weight of the acrylic acid-based monomer.

In addition, such a monomer composition may be prepared in the form of a solution whrein raw materials including the aforementioned monomers, internal crosslinking agents, foaming agents, and initiators are dissolved in a solvent.

In this case, any solvent capable of dissolving the aforementioned raw materials may be used without limitation in its composition. For example, the solvent may include water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethyl ether, toluene, xylene, butyrolactone, carbitol, methyl cellosolve acetate, N,N-dimethylacetamide, or mixtures thereof and the like.

The step of forming the hydrogel polymer through polymerization of the monomer composition may be performed by a conventional polymerization method, and the process is not particularly limited. As a non-limiting example, it may be performed in a reactor equipped with a movable conveyor belt.

Specifically, when photopolymerization is performed on the monomer mixture in a reactor equipped with a movable conveyor belt, a hydrogel polymer in the form of a sheet can be obtained. In this case, the thickness of the sheet may vary depending on the concentration and injection speed of the injected monomer mixture, but it is normally preferable to adjust the thickness to 0.5 to 10 cm in order to ensure that the entire sheet is uniformly polymerized while securing production speed and the like.

The typical moisture content of the hydrogel polymer obtained by such a method may be 40% by weight to 80% by weight. Meanwhile, throughout this specification, "moisture content" refers to the content of moisture relative to the total weight of the hydrogel polymer and means a value obtained by subtracting the weight of the polymer in a dried state from the weight of the hydrogel polymer. Specifically, it is defined as a value calculated by measuring the weight loss due to evaporation of moisture from the polymer during the process of drying by raising the temperature of the polymer through infrared heating. In this case, the drying conditions involve raising the temperature from room temperature to 180°C and then maintaining it at 180°C, and the total drying time is set to 20 minutes, including 5 minutes for the temperature raising step, to measure the moisture content.

### (Step 2: Base resin manufacturing step)

Next, the method comprises a step of forming base resin particles by coarsely pulverizing, drying, pulverizing, and classifying the hydrogel polymer.

First, the obtained hydrogel polymer is coarsely pulverized before a drying process in order to increase drying efficiency and further improve the absorption capacity and absorption rate of a final polymer.

In the case of a hydrogel polymer polymerized using the aforementioned thermally decomposable internal crosslinking agent, the hydrogel polymer has an appropriate internal crosslinking degree, and accordingly, in the coarse pulverization step, pulverization can be easily performed to a desired extent without process load, whereby drying efficiency can also be further improved. For example, even if the pulverization conditions are more finely controlled in the coarse pulverization step, the phenomenon of the hydrogel polymer being crushed or the pulverized polymers aggregating with each other is minimized, and accordingly, desired absorption properties can be improved while maintaining process stability.

Meanwhile, the pulverizing machine used in the coarse pulverizing step is not limited in configuration, but specifically, it may include any one selected from the pulverizing machine group consisting of a vertical pulverizer, a turbo cutter, a turbo grinder, a rotary cutter mill, a cutter mill, a disc mill, a shred crusher, a crusher, a chopper, and a disc cutter, and preferably, a chopper can be used.

When the coarse pulverizing step is performed with a chopper, preferably, the coarse pulverizing step may be performed using a chopper including a perforated plate having a hole size of 16 mm or less and an opening ratio of 60% or less. As such, when the hole size decreases in the coarse pulverizing process, the absorption rate can be improved, but there is a problem in that the hydrogel polymer is smeared or the pulverized polymers aggregate with each other, leading to an increase in chopper load in the coarse pulverizing process itself, thereby lowering process stability. When manufacturing a hydrogel polymer using a thermally decomposable internal crosslinking agent, such a problem does not occur, which is preferable. Accordingly, it is possible to realize desired absorption properties, especially a fast absorption rate under pressure, while maintaining process stability.

Meanwhile, if a perforated plate having a hole size exceeding 16 mm and an opening ratio exceeding 60%, which is outside the range, is used in the coarse pulverizing step, the size of the crumbs increases, whereby drying efficiency is lowered and both the absorption rate and the absorbency under load may decrease.

The hole size is preferably 16 mm or less, 13 mm or less, 12 mm or less, 10 mm or less, 9 mm or less, 8 mm or less, or 7 mm or less, or 5 mm or more, 7 mm or more, or 8 mm or more, or it may be 5 mm to 16 mm. Also, the opening ratio is preferably 65% or less, 60% or less, 50% or less, or 30% or more, 35% or more, or it may be 30 to 65% or 35 to 60%.

According to an embodiment of the present invention, the coarse pulverizing step can be performed at a chopper load of 35 to 55 A, and preferably, can be performed at 37 A to 53 A.

When the chopper load current value becomes excessively high, it may be difficult to smoothly perform the process. The chopper load value of 35 A to 55 A is a range in which the coarse pulverizing process can be easily performed, which means that there is substantially no process load. As described above, the hydrogel polymer polymerized using a specific thermally decomposable crosslinking agent does not smear or reside in the chopper during the coarse pulverizing process, so that an appropriate chopper load can be maintained.

Specifically, the chopper load refers to a power value input to maintain a constant driving frequency of a chopper drive shaft while a polymer is pulverized in the chopper, and specifically, it may be measured under conditions of 65°C and 60 Hz. A more specific measurement method will be described in more detail in the experimental examples section described below.

According to an embodiment of the present invention, in the coarse pulverization step, the bulk density (Crumb B/D) of crumb particles that do not pass through a 9.50 mm mesh sieve according to ASTM E11, that is, are retained on the sieve, among the coarsely pulverized hydrogel polymers, may be 0.70 kg/m³ or more, preferably 0.70 kg/m³ to 0.85 kg/m³, or 0.73 kg/m³ to 0.83 kg/m³. When the Crumb B/D value is below the above range, process stability is lowered, and clumping of the crumb occurs in a dryer, which creates excessive flow paths for hot air and makes uniform drying impossible, thereby potentially leading to reduced drying efficiency. As described above, the hydrogel polymer polymerized using a specific thermally decomposable internal crosslinking agent is preferable because the hydrogel polymer is not mashed during the coarse pulverizing process and the pulverized polymers do not aggregate with each other, thereby securing process stability.

Specifically, the Crumb B/D refers to a bulk density measured by classifying the coarsely pulverized hydrogel polymer for 5 minutes or more at an amplitude of 1.5 using a sieve according to ASTM E11, and then placing 1,000 g of crumb particles that do not pass through a 9.50 mm mesh sieve into a cylindrical cylinder having an inner diameter of 8 cm and a volume of 1,000 ml, and a more specific measurement method will be described in the Experimental Examples section below.

Next, the method comprises a step of forming base resin particles by drying and pulverizing the coarsely pulverized hydrogel polymer.

First, a step of drying the coarsely pulverized hydrogel polymer is performed. As described above, the hydrogel polymer has a proper internal crosslinking density due to the thermally decomposable internal crosslinking agent used in the polymerization step, and the coarse pulverization process can be smoothly performed without process load. Accordingly, the hydrogel polymer having a relatively small particle size is effectively dried in the drying step, and desired excellent absorption properties can be exhibited. Meanwhile, in the drying step, the thermally decomposable internal crosslinking agent used in the polymerization step is decomposed. Specifically, the internal crosslinking density is reduced to a proper level through hydrolysis, so that the physical properties of the base resin can be improved, and accordingly, the final superabsorbent polymer can exhibit excellent absorption properties, especially a fast absorption rate.

In this case, the drying temperature of the drying step may be 150 to 250°C. If the drying temperature is less than 150°C, the drying time becomes excessively long and there is a concern that the physical properties of the finally formed superabsorbent polymer may deteriorate. If the drying temperature exceeds 250°C, only the surface of the polymer is excessively dried, which may cause the generation of fine powder in a subsequent pulverizing process and there is a concern that the physical properties of the finally formed superabsorbent polymer may deteriorate. Therefore, preferably, the drying may be performed at a temperature of 150 to 200°C, and more preferably at a temperature of 150 to 190°C.

The drying may be performed for 20 to 90 minutes in consideration of process efficiency and the like, but is not limited thereto.

Meanwhile, the drying step may be performed as a multi-step process within the aforementioned temperature range.

The drying method of the drying step may also be selected and used without limitation in its configuration, as long as it is commonly used for a drying process of a hydrogel polymer. Specifically, the drying step may be performed by methods such as hot air supply, infrared irradiation, microwave irradiation, or ultraviolet irradiation. In the case of hot air supply, it may be performed by a method using an oven capable of upward and downward air flow transition.

The moisture content of the polymer after such a drying step may be about 0.1 to about 10% by weight.

Next, a step of pulverizing the dried polymer obtained through the drying step is performed.

The polymer powder obtained after the pulverizing step may have a particle size of 150 to 850 µm. A pulverizer used for pulverizing to such a particle size may specifically be a pin mill, a hammer mill, a screw mill, a roll mill, a disc mill, a jog mill, or the like, but is not limited to the above-described examples.

Further, in order to manage the physical properties of the superabsorbent polymer produced as a final product after the pulverizing step, a separate process of classifying the base resin particles obtained after the pulverizing according to the particle size may be performed.

Preferably, base resin particles having a particle size of 150 µm to 850 µm are classified, and only base resin particles having such a particle size may be prepared as a product through a surface crosslinking reaction step. More specifically, the base resin particles subjected to the classification have a particle size of 150 µm to 850 µm, may include 50% by weight or more of particles having a particle size of 300 µm to 600 µm, and fine powder having a particle size of less than 150 µm may be included in an amount of less than 3% by weight.

The base resin manufactured by coarse pulverizing, drying, pulverizing, and classifying the hydrogel polymer can satisfy a surface area to actual volume ratio of 35 mm⁻¹ or more.

The surface area to actual volume ratio means a value obtained by dividing the total surface area of base resin particles by the total volume of base resin particles within a specific reference volume.

When the above value satisfies 35 mm⁻¹ or more, irregularities can be appropriately formed on the surface of base resin particles so that the surface area can be widened, and through this, various fluid absorption paths are formed to implement excellent absorption properties, especially a fast absorption rate under pressure. Preferably, the surface area to actual volume ratio may be 35 to 55 mm⁻¹, and more preferably 35 to 50 mm⁻¹ or 35 to 48 mm⁻¹. If the surface area to actual volume ratio of the base resin is less than 35 mm⁻¹, sufficient absorption paths are not formed to a desired degree, and thus the absorption properties of the final superabsorbent polymer may be reduced.

The surface area to actual volume ratio can be derived using a 3D X-ray microscope (XRM). In the case of XRM, tomographic images are acquired by irradiating X-rays while rotating a sample, and 3D data can be obtained based on this. This is called 3D reconstruction. Conversely, 2D cross-sectional images can be extracted from the obtained 3D data, and after removing noise, the measurement target can be separated and converted back into 3D volume data. When a measurement target is separated from an XRM 2D cross-sectional image and converted back to a 3D volume, the measurement target can be precisely observed in a 3D form. In this way, when XRM is used, the resin to be measured can be analyzed in a 3D form or a 2D form.

More specific surface area to actual volume ratio will be described in the experimental examples to be described later.

Meanwhile, the surface area to actual volume ratio of the base resin particles can be realized by adjusting the manufacturing process conditions of the base resin particles. For example, components, contents, polymerization process conditions, and the like used in the polymerization step can be controlled. When the specific thermally decomposable crosslinking agent described above is used, it is suitable for controlling the surface area properties. At the same time, it can be realized by controlling coarse pulverization, pulverization, and drying conditions within appropriate ranges during the manufacturing steps of the base resin particles.

### (Step 3: Surface crosslinking step)

Subsequently, the method comprises crosslinking a portion of a surface of the base resin particles by heat-treating the base resin particles in the presence of a surface crosslinking agent.

The surface crosslinking step involves inducing a crosslinking reaction on the surfaces of the base resin particles in the presence of a surface crosslinking composition comprising a surface crosslinking agent, wherein unsaturated bonds of the acrylic acid-based monomers remaining on the surfaces without being crosslinked are crosslinked by the surface crosslinking agent, and a superabsorbent polymer having an increased surface crosslinking density is formed.

Specifically, a surface crosslinked layer may be formed by a heat treatment process in the presence of a surface crosslinking agent, and in the heat treatment process, the surface crosslinking density, i.e., the external crosslinking density, increases while the internal crosslinking density remains unchanged, so that the prepared superabsorbent polymer having the surface crosslinked layer formed thereon has a structure in which the external crosslinking density is higher than the internal crosslinking density.

In the surface crosslinking step, a surface crosslinking agent composition comprising an alcohol-based solvent and water in addition to the surface crosslinking agent can be used.

Meanwhile, any crosslinking agent component conventionally used for the manufacture of superabsorbent polymers may be used as the surface crosslinking agent included in the surface crosslinking agent composition without any particular limitation. For example, the surface crosslinking agent may include at least one polyol selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol, and glycerol; at least one carbonate-based compound selected from the group consisting of ethylene carbonate and propylene carbonate; epoxy compounds such as ethylene glycol diglycidyl ether; oxazoline compounds; oxazolidinone compounds; polyamine compounds; mono-, di-, or polyoxazolidinone compounds; or cyclic urea compounds. Preferably, those as the same as the aforementioned internal crosslinking agent can be used, and for example, alkylene glycol diglycidyl ether-based compounds such as propylene glycol and ethylene glycol diglycidyl ether can be used.

Such a surface crosslinking agent may be used in an amount of 0.001 to 2 parts by weight based on 100 parts by weight of base resin particles. Preferably, it may be used in an amount of 0.005 parts by weight or more, 0.01 parts by weight or more, or 0.02 parts by weight or more, and 0.5 parts by weight or less, or 0.3 parts by weight or less. By adjusting the content range of the surface crosslinking agent to the above-described range, a superabsorbent polymer exhibiting overall physical properties such as excellent absorption performance and liquid permeability can be prepared.

Meanwhile, the surface crosslinking agent is added to the base resin particles in the state of a surface crosslinking agent composition comprising the same, and there is no particular limitation on the configuration of the method for adding such a surface crosslinking agent composition. For example, a method of putting both the surface crosslinking agent composition and the base resin particles into a reaction vessel and mixing them, a method of spraying the surface crosslinking agent composition onto the base resin particles, a method of continuously supplying and mixing the base resin particles and the surface crosslinking agent composition into a continuously operated mixer, or the like can be used.

Further, the surface crosslinking agent composition may further include water and/or a hydrophilic organic solvent as a medium. This provides an advantage in that the surface crosslinking agent and the like can be uniformly dispersed on the base resin. In this case, the content of the water and the hydrophilic organic solvent may be applied by adjusting the addition ratio relative to 100 parts by weight of the base resin powder for the purpose of inducing uniform dissolution/dispersion of the surface crosslinking agent and preventing agglomeration of the base resin particles while optimizing the surface penetration depth of the surface crosslinking agent.

The surface crosslinking step may be performed by heat-treating at a temperature of 110°C to 200°C, or 110°C to 150°C, for 30 minutes or more. More specifically, the surface crosslinking may be performed by setting the above-described temperature as a maximum reaction temperature and heat-treating at the maximum reaction temperature for 20 to 80 minutes, or 20 to 70 minutes, to carry out the surface crosslinking reaction.

By satisfying such surface crosslinking process conditions (particularly, temperature elevation conditions and reaction conditions at the maximum reaction temperature), a superabsorbent polymer appropriately satisfying physical properties such as improved liquid permeability under pressure can be prepared.

The means for increasing the temperature for the surface crosslinking reaction is not particularly limited. Heating can be performed by supplying a heating medium or by directly providing a heat source. In this case, types of the heating medium that can be used include heated fluids such as steam, hot air, or hot oil, but are not limited thereto. In addition, the temperature of the supplied heating medium may be appropriately selected in consideration of the means of the heating medium, the heating rate, and the target temperature. On the other hand, examples of the directly supplied heat source include a heating method using electricity and a heating method using gas, but are not limited to the above-described examples.

Meanwhile, in the method for manufacturing a superabsorbent polymer according to an embodiment of the present invention, an aluminum salt such as aluminum sulfate or various other multivalent metal salts may be further used during surface crosslinking in order to further improve liquid permeability and the like. Such multivalent metal salts may be included on a surface crosslinking layer of the finally prepared superabsorbent polymer.

### (Superabsorbent polymer)

According to an embodiment of the present invention, a superabsorbent polymer prepared by the method for preparing the superabsorbent polymer is provided.

The superabsorbent polymer may have a particle size of 150 to 850 µm. More specifically, at least 95% by weight of the superabsorbent polymer has a particle size of 150 to 850 µm, the superabsorbent polymer may include 50% by weight or more of particles having a particle size of 300 to 600 µm, and fine powder having a particle size of less than 150 µm may be present in an amount of less than 3% by weight.

The above-described superabsorbent polymer exhibits excellent absorption properties, particularly having a high absorption rate, centrifuge retention capacity, and absorbency under load.

The superabsorbent polymer may have a centrifuge retention capacity (CRC) according to EDANA WSP 241.3 of 28 to 50 g/g, and preferably 28.5 to 50 g/g, 32 to 50 g/g, 34 to 50 g/g, or 30 to 45 g/g. A specific measurement method thereof will be described in more detail in the Experimental Examples section to be described later.

The superabsorbent polymer may have a 0.9 psi absorbency under load according to the EDANA method WSP 242.3 of 15 to 30 g/g, and preferably, 15 to 28 g/g, 15 to 25 g/g, or 15.5 to 23 g/g. A specific measurement method thereof will be described in more detail in the Experimental Examples section described below.

The superabsorbent polymer may have an absorption rate according to a Vortex method of 40 seconds or less, preferably 38 seconds or less, or 35 seconds or less. The lower limit of the absorption rate may be 5 seconds or more, 10 seconds or more, 15 seconds or more, or 20 seconds or more. The absorption rate according to the Vortex method can be measured in units of seconds in accordance with the method described in International Patent Publication No. 1987-003208, and a specific measurement method thereof will be described in more detail in the experimental example section to be described later.

The superabsorbent polymer may have a permeability of 40 to 120 seconds, and preferably 50 to 115 seconds, or 50 to 110 seconds. The permeability is measured as the time taken for 20 ml of saline to pass through the swollen superabsorbent polymer under a pressure of 0.3 psi after putting 0.2 g of a sample of the superabsorbent polymer into a column tube with a diameter of 2.5 cm, adding 50 ml of saline, and swelling the sample for 30 minutes. Here, the saline means a 0.9 wt% sodium chloride (NaCl) aqueous solution, and a specific measurement method thereof will be described in more detail in the experimental example section to be described later.

The superabsorbent polymer may have a Gel Bed Permeability (GBP) of at least 30 darcy, preferably at least 33 darcy, and may be 60 darcy or less, 50 darcy or less, or 55 darcy or less. A specific method for measuring GBP will be described in greater detail in the Experimental Example section below.

The superabsorbent polymer may have a Gel-Vacuum AUL (5 min) of 20 g/g or more, preferably, 20 to 25 g/g or 20 to 23.5 g/g. A specific measurement method thereof will be described in more detail in the experimental example section to be described later.

Hereinafter, preferred embodiments are presented to aid in understanding the present invention. However, the following embodiments are only for illustrating the present invention, and the present invention is not limited thereto.

### Examples and Comparative Examples: Preparation of Superabsorbent polymer

### Example 1-1

### (Step 1 - Polymerization step)

An aqueous monomer solution composition was prepared by mixing 100 g of acrylic acid, 0.05 g (500 ppmw relative to acrylic acid) of diglycidyl 1,2-cyclohexanedicarboxylate (DGHP), which is a thermally decomposable internal crosslinking agent, as an internal crosslinking agent, 0.008 g of Phenylbis(2,4,6-trimethylbenzoyl)phosphine oxide (IRGACURE 819) as a photoinitiator, 0.2 g of sodium persulfate (SPS) as a thermal initiator, 128 g of 31.5% caustic soda (NaOH), 63.5 g of water, and 0.04 g of a surfactant (calcium stearate).

The aqueous monomer solution composition was fed into a feeding part of a polymerizer equipped with a continuously moving conveyor belt, and ultraviolet irradiation was performed using a UV irradiation device while maintaining a polymerization atmosphere temperature of 80°C (irradiation intensity: 10 mW/cm²), and UV polymerization was carried out for 3 minutes to prepare a hydrogel polymer.

### (Step 2 - Base resin manufacturing step)

The polymerized sheet was taken out and cut into pieces of 3 cm × 3 cm, and then a chopping process was performed using a meat chopper comprising a perforated plate having a hole size of 16 mm and an opening ratio of 36% to obtain crumb.

Subsequently, the coarsely pulverized hydrogel polymer was introduced into an oven capable of changing air flow direction, and hot air at 195°C was allowed to flow from bottom to top for 15 minutes and from top to bottom for 15 minutes to uniformly dry the same. After drying, the moisture content of the dried product was adjusted to 2% or less. The obtained dried product was pulverized using a pin mill. Subsequently, a polymer having a particle size of 150 µm to 850 µm was classified using a sieve to obtain base resin particles.

### (Step 4 - Surface crosslinking step)

Thereafter, 100 parts by weight of the prepared base resin particles were uniformly mixed with a surface crosslinking solution (3.5 parts by weight of water, 3.0 parts by weight of propylene glycol as a co-solvent, 0.11 parts by weight of ethylene glycol diglycidyl ether as a surface crosslinking agent, 0.4 parts by weight of aluminum sulfate 18-hydrate (Al-S), and 0.1 parts by weight of silica (Aerosil A200)). Next, the mixture was subjected to a surface crosslinking reaction at 140°C for 20 minutes, and then 0.5 parts by weight of silica (Aerosil A200) was mixed as a liquid permeability improver for final surface treatment. Thereafter, a superabsorbent polymer having an average particle size of 150 to 850 µm was obtained using a sieve. In the superabsorbent polymer thus obtained, the content of particles having an average particle size of less than 150 µm was less than 2%.

### Examples 1-2 to 1-7 and Comparative Examples 1-1 to 1-13

A superabsorbent polymer was prepared in the same manner as in Example 1-1, except that the component and content of the internal crosslinking agent used in the polymerization step of Step 1 and the process conditions of the coarse pulverization step of Step 2 were changed as shown in Table 1 below.

**[Table 1]**

| Category | Polymerization step | | Coarse pulverization step |
|---|---|---|---|
| | Component | Content* | Hole size |
| Example 1-1 | A-1 | 500 | 16 mm |
| Example 1-2 | A-1 | 700 | 16 mm |
| Example 1-3 | A-1 | 1,000 | 16 mm |
| Example 1-4 | A-1 | 1,500 | 16 mm |
| Example 1-5 | A-1 | 1,800 | 16 mm |
| Example 1-6 | A-1 | 1,500 | 10 mm |
| Example 1-7 | A-1 | 1,500 | 8 mm |
| Example 1-8 | A-2 | 1,500 | 16 mm |
| Comparative Example 1-1 | B-1 | 200 | 16 mm |
| Comparative Example 1-2 | B-1 | 300 | 16 mm |
| Comparative Example 1-3 | B-1 | 500 | 16 mm |
| Comparative Example 1-4 | B-1 | 700 | 16 mm |
| Comparative Example 1-5 | B-1 | 1,000 | 16 mm |
| Comparative Example 1-6 | B-1 | 1,500 | 16 mm |
| Comparative Example 1-7 | B-2 | 1,500 | 16 mm |
| Comparative Example 1-8 | B-2 | 2,000 | 16 mm |
| Comparative Example 1-9 | B-2 | 3,000 | 16 mm |
| Comparative Example 1-10 | B-2 | 4,000 | 16 mm |
| Comparative Example 1-11 | B-2 | 5,000 | 16 mm |
| Comparative Example 1-12 | B-1 | 1,500 | 10 mm |
| Comparative Example 1-13 | B-1 | 1,500 | 8 mm |
| Comparative Example 1-14 | B-3 | 1,500 | 16 mm |
| Comparative Example 1-15 | B-4 | 1,500 | 16 mm |
| Internal crosslinking agent (*ppmw relative to acrylic acid-based monomer) | | | |
| A-1: diglycidyl 1,2-cyclohexanedicarboxylate (DGHP) | | | |
| A-2: bis(4-glycidyloxyphenyl)disulfide | | | |
| B-1: ethylene glycol diglycidyl ether (EGDGE) | | | |
| B-2: polyethylene glycol diacrylate (PEGDA) | | | |
| B-3: diglycidyl phthalate | | | |
| B-4: diglycidyl adipate | | | |

### Experimental Example 1

For the superabsorbent polymers manufactured in Example 1 and Comparative Example 1, each physical property was measured by the following methods, and the results are shown in Table 2 below.

### (1) Process stability evaluation

### 1) Evaluation of chopper load in coarse pulverizing process

In the coarse pulverization step among the manufacturing steps of the superabsorbent polymers of the Examples and Comparative Examples, a meat chopper (SMC-22, SL Enterprise) equipped with a perforated plate was used, and during coarse pulverization under conditions of 65°C and 60 Hz, a current value measured by a current measuring device in the meat chopper was obtained, and the results are shown in Table 2 below.

### 2) Evaluation of Crumb B/D in the coarse pulverizing process

In the manufacturing steps of the superabsorbent polymers of the Examples and Comparative Examples, the coarsely pulverized hydrogel polymer was classified for 5 minutes or more at an amplitude of 1.5 using a sieve according to ASTM E11, and then 1,000 g of crumb particles that do not pass through a 9.50 mm mesh sieve were introduced into a cylinder having an inner diameter of 8 cm and a volume of 1,000 ml, and the bulk density was measured based on a volume-to-mass ratio, and the results are shown in Table 2 below.

### (2) Evaluation of absorption properties

### 1) Centrifuge Retention Capacity (CRC)

The centrifuge retention capacity by absorption capacity under no load for the superabsorbent polymers of the Examples and Comparative Examples was measured according to the European Disposables and Nonwovens Association (EDANA) standard EDANA WSP 241.3, and the results are shown in Table 2 below.

Specifically, from the superabsorbent polymers obtained through the Examples and Comparative Examples, respectively, a resin classified with a #30-50 sieve was obtained. A mass W₀(g) (about 0.2 g) of the resin was uniformly placed in a non-woven fabric bag and sealed, and then immersed in physiological saline (0.9 wt%) at room temperature. After 30 minutes, water was drained from the bag for 3 minutes under the condition of 250 G using a centrifuge, and the mass W₂(g) of the bag was measured. Also, after performing the same operation without using the resin, the mass W₁(g) at that time was measured.

CRC (g/g) was calculated according to the following Equation 1 using the respective masses obtained. [Equation 1] $CRC \left(g/g\right) = \left\{\left[{W}_{2}\left(g\right)-{W}_{1}\left(g\right)\right]/{W}_{0}\left(g\right)\right\} - 1$

### 2) Absorbency under load (AUL)

The 0.9 psi absorbency under load of the superabsorbent polymers of the Examples and Comparative Examples was measured according to the EDANA method WSP 242.3, and the results are shown in Table 2 below.

First, when measuring absorbency under load, the classified resin fraction used for the CRC measurement was used.

Specifically, a stainless steel 400-mesh wire net was attached to the bottom of a plastic cylinder having an inner diameter of 25 mm. Under conditions of room temperature and 50% humidity, a superabsorbent polymer W₀(g) was uniformly spread on the wire net, and a piston capable of uniformly further applying a load of 0.9 psi thereon had an outer diameter slightly smaller than 25 mm, had no gap with the inner wall of the cylinder, and was not obstructed in its vertical movement. At this time, the weight W₃(g) of the device was measured.

A glass filter with a diameter of 90 mm and a thickness of 5 mm was placed inside a petri dish with a diameter of 150 mm, and physiological saline consisting of 0.9 wt% sodium chloride was made to be at the same level as the top surface of the glass filter. One sheet of filter paper with a diameter of 90 mm was placed thereon. The measuring device was placed on the filter paper, and the liquid was absorbed under load for 1 hour. After 1 hour, the measuring device was lifted, and its weight W₄(g) was measured. Absorbency under load (g/g) was calculated according to the following Equation 2 using each obtained mass. [Equation 2] $AUP \left(g/g\right) = \left[{W}_{4}\left(g\right)-{W}_{3}\left(g\right)\right] / {W}_{0} \left(g\right)$

### 3) Permeability

The permeability of the superabsorbent polymers of the Examples and Comparative Examples was measured, and the results are shown in Table 2 below.

0.2 g of the superabsorbent polymer sample was placed into a column tube having a diameter of 2.5 cm, and 50 ml of saline was added to swell the resin for 30 minutes, and then the time taken for 20 ml of saline to pass through the swollen superabsorbent polymer under a pressure of 0.3 psi was measured. Here, the saline refers to a 0.9 wt% sodium chloride (NaCl) aqueous solution.

### 4) Vortex absorption rate

With respect to the superabsorbent polymers prepared in the Examples and Comparative Examples, particles having a particle size of 150 µm to 850 µm were taken, and the vortex absorption rate was measured according to the following method, and the results are shown in Table 2 below.
① First, 50 mL of 0.9% saline was placed into a 100 mL flat-bottomed beaker using a 100 mL graduated cylinder.
② Next, after placing the beaker at the center of a magnetic stirrer, a magnetic bar (diameter: 8 mm, length: 30 mm) was placed in the beaker.
③ Thereafter, the stirrer was operated so that the magnetic bar rotated at 600 rpm, and the bottommost part of a vortex created by stirring was made to touch the top of the magnetic bar.
④ After confirming that the temperature of the saline solution in the beaker reached 24.0°C, 2±0.01 g of superabsorbent polymer particles were added while simultaneously starting a stopwatch, and the time until the vortex disappeared and the liquid surface became completely level was measured in seconds, which was taken as the absorption rate.

**[Table 2]**

| Category | Process stability | | Absorption properties | | | |
|---|---|---|---|---|---|---|
| | Chopper Load (A) | Crumb B/D (kg/m³) | CRC (g/g) | 0.9 AUL (g/g) | Perm (sec.) | Vortex (sec.) |
| Example 1-1 | 51 | 0.73 | 42.4 | 15.9 | 111 | 40 |
| Example 1-2 | 51 | 0.73 | 39.8 | 17.3 | 108 | 40 |
| Example 1-3 | 48 | 0.74 | 37.5 | 19.8 | 91 | 40 |
| Example 1-4 | 46 | 0.77 | 35.1 | 22.3 | 79 | 37 |
| Example 1-5 | 37 | 0.81 | 34.2 | 25.8 | 44 | 33 |
| Example 1-6 | 48 | 0.80 | 34.9 | 22.5 | 58 | 33 |
| Example 1-7 | 51 | 0.83 | 35.2 | 22.7 | 49 | 31 |
| Example 1-8 | 50 | 0.73 | 40.1 | 16.9 | 110 | 40 |
| Comparative Example 1-1 | Not manufacturable | | | | | |
| Comparative Example 1-2 | Not manufacturable | | | | | |
| Comparative Example 1-3 | 70 | 0.60 | 37.2 | 10.2 | 213 | 44 |
| Comparative Example 1-4 | 62 | 0.62 | 35.4 | 16.3 | 148 | 44 |
| Comparative Example 1-5 | 60 | 0.62 | 27.8 | 19.8 | 89 | 44 |
| Comparative Example 1-6 | 59 | 0.66 | 26.7 | 24.4 | 40 | 44 |
| Comparative Example 1-7 | Not manufacturable | | | | | |
| Comparative Example 1-8 | 78 | 0.64 | 40.1 | 9.8 | 188 | 55 |
| Comparative Example 1-9 | 78 | 0.66 | 36.7 | 15.5 | 135 | 51 |
| Comparative Example 1-10 | 64 | 0.68 | 33.1 | 17.2 | 99 | 45 |
| Comparative Example 1-11 | 57 | 0.68 | 31.2 | 19.7 | 64 | 44 |
| Comparative Example 1-12 | 64 | 0.67 | 27.6 | 22.6 | 46 | 44 |
| Comparative Example 1-13 | 81 | 0.69 | 26.9 | 21.9 | 44 | 43 |
| Comparative Example 1-14 | 69 | 0.61 | 35.1 | 15.4 | 164 | 46 |
| Comparative Example 1-15 | 71 | 0.60 | 38.2 | 12.7 | 179 | 48 |

As can be seen from Table 2, in the Examples comprising a specific thermally decomposable internal crosslinking agent in the polymerization step, the process stability in the coarse pulverization process was excellent, and the physical properties of the final resin were also excellent.

In Comparative Examples 1-3, 1-4, 1-5, and 1-6, the same amount of internal crosslinking agent was used as in Examples 1-1 to 1-4; however, the specific thermally decomposable internal crosslinking agent of the present invention was not used, and accordingly, the absorption rate was reduced in all cases compared to the Examples. In addition, the centrifuge retention capacity was reduced compared to the Examples, and even at the same centrifuge retention capacity, the absorbency under load properties were reduced.

In Comparative Examples 1-1, 1-2, and 1-7, the content of the internal crosslinking agent was low, resulting in a low degree of internal crosslinking, and thus the chopping process could not be performed, making manufacturing difficult and rendering them unsuitable for production as products.

In Comparative Example 1-14, due to the characteristics of the aromatic ring compound, the thermal decomposition efficiency was reduced, making it difficult to achieve absorbency under load properties at a comparable retention capacity.

In Comparative Example 1-15, the balance between centrifuge retention capacity and absorbency under load properties was somewhat deteriorated due to low solubility and the absence of a uniform crosslinking effect.

### Example 2-1

### (Step 1: Polymerization step)

A monomer mixture was prepared by mixing 0.05 parts by weight of diglycidyl 1,2-cyclohexanedicarboxylate (DGHP) as a thermally decomposable internal crosslinking agent and 0.008 parts by weight of IRGACURE 819 as a photoinitiator with 100 parts by weight of acrylic acid. Subsequently, while continuously supplying the monomer mixture using a metering pump, 140 parts by weight of a 31 wt% sodium hydroxide aqueous solution was simultaneously and continuously mixed in-line. At this time, after confirming that the temperature of the monomer mixture increased to about 72°C or higher due to heat of neutralization, it was allowed to cool until the temperature reached 40°C. When the temperature reached 40°C, 0.1 parts by weight of solid F36D (1,000 ppmw relative to the acrylic acid monomer), which is a capsule-type foaming agent, and 0.01 parts by weight of calcium stearate (100 ppmw relative to the acrylic acid monomer) as a surfactant were added to the monomer mixture. Simultaneously, 5.6 parts by weight of a 4 wt% sodium persulfate aqueous solution was added. The solution was poured into a Vat tray (15 cm × 15 cm) installed in a square polymerizer equipped with a light irradiation device on the top and having an interior preheated to 80°C, and light was irradiated to initiate polymerization. After UV irradiation for 60 seconds, the reaction was further carried out for 120 seconds to obtain a hydrogel polymer in the form of a sheet.

### (Step 2: Base resin manufacturing step)

After the sheet-form hydrogel polymer was cut into pieces of 3 cm × 3 cm, a chopping process was performed using a meat chopper comprising a perforated plate having a hole size of 10 mm and an opening ratio of 60% to prepare crumb.

The coarsely pulverized hydrogel polymer was dried in a dryer capable of changing the air flow direction vertically. Hot air at 170°C was allowed to flow from bottom to top for 15 minutes and then from top to bottom for 15 minutes so that the moisture content of the dried hydrogel polymer became about 1% or less, thereby uniformly drying the hydrogel polymer.

The dried hydrogel polymer was pulverized using a Pulverisette 19 (Fritsch). First, pulverization was performed after fixing a screen mesh having 1 mm openings at the bottom of the rotating device, and the pulverized product was classified using an ASTM standard sieve to obtain base resin particles having a particle size of 150 to 850 µm.

### (Step 3: Surface crosslinking process)

Subsequently, a surface crosslinking composition comprising 5 parts by weight of water, 3 parts by weight of propylene glycol, 0.1 parts by weight of aluminum sulfate, and 0.1 parts by weight of ethylene glycol diglycidyl ether (EGDGE) was prepared (based on 100 parts by weight of base resin particles).

Thereafter, a surface crosslinking mixture was prepared by mixing 100 parts by weight of base resin particles and 8.2 parts by weight of the prepared surface crosslinking composition. The surface crosslinking mixture was supplied to a surface crosslinking reactor, and a surface crosslinking reaction of the base resin particles was carried out at 130°C for 40 minutes.

Thereafter, 0.1 parts by weight of fumed silica was mixed to obtain a superabsorbent polymer. Subsequently, the superabsorbent polymer was classified using a sieve to obtain particles having a particle size of 150 to 850 µm. In the superabsorbent polymer thus obtained, the content of particles having a particle size of less than 150 µm was less than 2%.

### Examples 2-2 to 2-2 and Comparative Examples 2-1 to 2-5

A superabsorbent polymer was prepared in the same manner as in Example 1, except that the type and content of the internal crosslinking agent used in the polymerization process of Step 1 were changed as shown in Table 3, and the coarse pulverizing process conditions of Step 2 were changed.

**[Table 3]**

| Category | Polymerization step (Internal crosslinking agent) | | Coarse pulverization step |
|---|---|---|---|
| | PEGDA | DGHP | Hole size (mm)/Opening ratio (%) |
| Example 2-1 | 5,000 | 5,000 | 10/60 |
| Example 2-2 | 5,000 | 3,000 | 10/60 |
| Example 2-3 | 4,000 | 2,000 | 10/60 |
| Example 2-4 | 3,000 | 2,000 | 10/60 |
| Example 2-5 | 2,000 | 1,500 | 10/60 |
| Example 2-6 | 0 | 7,000 | 10/60 |
| Example 2-7 | 0 | 6,000 | 10/60 |
| Example 2-8 | 0 | 5,000 | 10/60 |
| Example 2-9 | 5,000 | 5,000 | 8/60 |
| Example 2-10 | 5,000 | 3,000 | 8/60 |
| Comparative Example 2-1 | 7,000 | 0 | 10/60 |
| Comparative Example 2-2 | 6,000 | 0 | 10/60 |
| Comparative Example 2-3 | 4,000 | 0 | 10/60 |
| Comparative Example 2-4 | 2,000 | 0 | 10/60 |
| Comparative Example 2-5 | 6,000 | 0 | 8/60 |
| Internal crosslinking agent (*ppmw relative to acrylic acid-based monomer) | | | |
| DGHP: diglycidyl 1,2-cyclohexanedicarboxylate | | | |
| PEGDA: : polyethylene glycol diacrylate | | | |

### Experimental Example 2

For the superabsorbent polymers prepared in Example 2 and Comparative Example 2, each physical property was measured by the following methods, and the results are shown in Table 4 below.

### 2-1. Physical property analysis of base resin particles

### (1) Surface area to actual volume ratio

For the base resin particles of Step 2 prepared in the Examples and Comparative Examples, the surface area to actual volume ratio was measured according to the following steps using a 3D X-ray microscope (XRM), and the results are shown in Table 4 below.

### Step 1) Drying and sampling of base resin particles

The base resin particles of Step 2 were sampled into a sampling port having a size of 1.5 cm × 1.5 cm × 1.5 cm (width × length × height).

### Step 2) Image acquisition

The sampled base resin particles were analyzed using XRM (ZEISS, Xradia 620 Versa) under the following conditions to derive a 3D image of the superabsorbent polymer.

### <Conditions>

■ X-Ray Energy: 70 kV
■ detector: Flat Panel
■ Voxel Size: 5 µm
■ Measurement time: 0.05 s/frame
■ total images: 4501 images

### Step 3) Derive the surface area to actual volume ratio (S_{SAP}/V_{C})

(STEP 1) A region of interest (measurement region) was set and cut out from an XRM cross-sectional 2D image of 3D reconstructed base resin particles.

(STEP 2) Gaussian blur was applied to the cut-out 2D cross-sectional image to remove noise.

Subsequently, the 2D cross-sectional image was converted into a binary image using Otsu's thresholding method to distinguish between the background image and the base resin particle image. This was applied to all 2D cross-sectional images to be measured to obtain 2D cross-sectional images in which base resin particles were separated.

(STEP 3) The plurality of 2D cross-sectional images were stacked, and 3D rendering was performed.

(STEP 4) The volume of total base resin particles (V_{C}) was measured from the 3D rendered volume data. Also, considering the connectivity of the 3D rendered image, the surface area of total base resin particles (S_{SAP}) excluding the surface area of closed pore regions was measured. The surface area of the base resin particles (S_{SAP}) was divided by the volume of total base resin particles (V_{C}) to derive the surface area to actual volume ratio (S_{SAP}/V_{C}) of the measurement target base resin particles.

### (2) Entangled number ratio

For the base resin particles of Step 3 prepared in the Examples and Comparative Examples, the morphology of the particles was quantified based on SEM image analysis to analyze the pore size and the ratio of the number of pores, and the results are shown in Table 4 below.
1) Sample preparation: A base resin is classified at an amplitude of 1.0 for 10 minutes using a particle classifier (such as a sieve shaker from Retsch) to prepare a sample having a particle size of 150 µm to 850 µm. In this case, the particle size of the base resin particles may be measured according to the European Disposables and Nonwovens Association (EDANA) standard EDANA WSP 220.3 method.
2) Image acquisition: After mounting the prepared sample on a stage in the equipment, SEM images were obtained by scanning. The resolution was set to 1 pixel = 1/235 mm = 0.00425 mm.
3) Image processing: For the acquired SEM images, shape data was classified as follows according to the following criteria (refer to FIG. 1), and Flat/Entangled/Bubble/Pore were automatically classified using Mask R-CNN[1] to derive the counts.
   ① Flat particle: flat particle
   ② Entangled particles: particles subjected to shear or irregularly shaped particles such as fine powder reassemblies
   ③ Bubble: foaming bubbles appearing as white borders
   ④ Pore: Pores appearing black
4) Measurement of number ratio: Based on the SEM image analysis, the number ratio of Entangled particles was measured, and the results are shown in Table 2 below. [Equation 5] 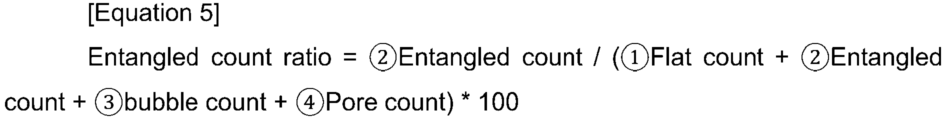 Entangled count ratio = ②Entangled count / (①Flat count + ②Entangled count + ③bubble count + ④Pore count) * 100

### (3) Centrifuge retention capacity (CRC, Centrifuge Retention Capacity)

For the base resin particles of Step 3 manufactured in the Examples and Comparative Examples, the centrifuge retention capacity by absorption capacity under no load was measured according to the European Disposables and Nonwovens Association (EDANA) standard EDANA WSP 241.3, and the results are shown in Table 4 below.

Specifically, from the base resins obtained through the Examples and Comparative Examples, respectively, a resin classified with a #30-50 sieve was obtained. A mass W'₀(g) (about 0.2 g) of the resin was uniformly placed in a non-woven fabric bag and sealed, and then immersed in physiological saline (0.9 wt%) at room temperature. After 30 minutes, the bag was dehydrated for 3 minutes under the condition of 250 G using a centrifuge, and the mass W'₂(g) of the bag was measured. Further, after performing the same procedure without using the resin, the mass W'₁(g) at that time was measured.

CRC (g/g) was calculated according to Equation 1-1 below using the respective masses obtained. [Equation 1-1] $CRC \left(g/g\right) = \left\{\left[W{′}_{2}\left(g\right)-W{′}_{1}\left(g\right)\right]/W{′}_{0}\left(g\right)\right\} - 1$

### 2-2. Physical property analysis of superabsorbent polymer

### (1) Centrifuge Retention Capacity (CRC)

The centrifuge retention capacity by absorption capacity under no load of the superabsorbent polymers manufactured in the Examples and Comparative Examples was measured according to the European Disposables and Nonwovens Association (EDANA) standard EDANA WSP 241.3, and the results are shown in Table 4 below.

Specifically, from the superabsorbent polymers obtained through the Examples and Comparative Examples, respectively, a resin classified with a #30-50 sieve was obtained. Such resin W₀(g) (about 0.2 g) was uniformly put into a non-woven fabric bag and sealed, and then immersed in physiological saline (0.9 wt%) at room temperature. After 30 minutes, the bag was drained for 3 minutes under the condition of 250G using a centrifuge, and the mass W₂(g) of the bag was measured. In addition, after performing the same operation without using the resin, the mass W₁(g) was measured.

CRC (g/g) was calculated according to the following Equation 1 using each obtained mass. [Equation 1] $CRC \left(g/g\right) = \left\{\left[{W}_{2}\left(g\right)-{W}_{1}\left(g\right)\right]/{W}_{0}\left(g\right)\right\} - 1$

### (2) Absorbency Under Load (AUL)

The 0.9 psi absorbency under load of the superabsorbent polymers manufactured in the Examples and Comparative Examples was measured according to the EDANA method WSP 242.3, and the results are shown in Table 4 below.

First, when measuring absorbency under load, the classified resin fraction used in the CRC measurement was used.

Specifically, a stainless steel 400 mesh wire net was attached to the bottom of a plastic cylinder having an inner diameter of 25 mm. Under conditions of room temperature and 50% humidity, a superabsorbent polymer W₀(g) was uniformly spread on the wire net, and a piston capable of uniformly applying an additional load of 0.9 psi thereon was configured to have an outer diameter slightly smaller than 25 mm and no gap with the inner wall of the cylinder, such that its up and down movement was not obstructed. At this time, the weight W₃(g) of the device was measured.

A glass filter with a diameter of 90 mm and a thickness of 5 mm was placed inside a petri dish with a diameter of 150 mm, and physiological saline consisting of 0.9 wt% sodium chloride was made to be at the same level as the top surface of the glass filter. One sheet of filter paper with a diameter of 90 mm was placed thereon. The measuring device was placed on the filter paper, and the liquid was absorbed under load for 1 hour. After 1 hour, the measuring device was lifted, and its weight W₄(g) was measured. Absorbency under load (g/g) was calculated according to the following Equation 2 using each obtained mass. [Equation 2] $AUL \left(g/g\right) = \left[{W}_{4}\left(g\right)-{W}_{3}\left(g\right)\right] / {W}_{0} \left(g\right)$

### (3) Vortex absorption rate

For the superabsorbent polymers manufactured in the Examples and Comparative Examples, particles having a particle size of 150 µm to 850 µm were taken, and the vortex (Vortex) absorption rate was measured according to the following method, and the results are shown in Table 4 below.
① First, 50 mL of 0.9% saline was added to a 100 mL flat-bottomed beaker using a 100 mL graduated cylinder.
② Next, after placing the beaker so that it is at the center of a magnetic stirrer, a magnetic bar (diameter 8 mm, length 30 mm) was put into the beaker.
③ Thereafter, the stirrer was operated such that the magnetic bar rotated at 600 rpm, and the lowest part of a vortex created by the stirring reached the top of the magnetic bar.
④ After confirming that the temperature of the saline in the beaker reached 24.0°C, 2 ± 0.01 g of superabsorbent polymer particles were added while simultaneously starting a stopwatch, and the time until the vortex disappeared and the liquid surface became completely level was measured in seconds, and this was taken as the absorption rate.

### (4) Gel Bed Permeability (GBP)

For the superabsorbent polymers manufactured in the Examples and Comparative Examples, the free swelling gel bed permeability (GBP) for physiological saline was measured, and the results are shown in Table 4 below. The gel bed permeability was measured according to the following method described in Korean Patent Application No. 10-2014-7018005.

The gel bed permeability was measured in the same manner as the method (using the same apparatus) described in Korean Patent Application No. 10-2014-7018005, and according to Equation 3 below. [Equation 3] $K = \left[Q\times H\times Mu\right] / \left[A\times Rho\times P\right]$

In Equation 3, K is permeability (cm²), Q is flow rate (g/sec), H is sample height (cm), Mu is liquid viscosity (poise) (approximately 1 cps for the test solution used in the test), A is the cross-sectional area for liquid flow (cm²), Rho is liquid density (g/cm³) (for the test solution used in the test), and P is hydrostatic pressure (dynes/cm²) (typically about 3,923 dynes/cm²).

The hydrostatic pressure is calculated by the following Equation 3-1. [Equation 3-1] $P = Rho \times g \times h$

In Equation 3-1, Rho is liquid density (g/cm³), g is gravitational acceleration, typically 981 cm/sec², and h is fluid height (for example, 7.8 cm for the permeability test described herein).

### (5) 5-minute 0.3 Gel-Vacuum AUL (0.3Gel-vac. 5min)

For the superabsorbent polymers manufactured in the Examples and Comparative Examples, the 0.3 psi Gel-Vacuum AUL (5 min) was measured. A stainless steel 400 mesh screen was mounted on the bottom of a plastic cylinder with an inner diameter of 25 mm. Then, at room temperature (25±1°C) and 50% humidity, W₀(g) of the superabsorbent polymer for which 5-minute Gel-Vacuum AUL was to be measured was uniformly spread on the screen. Subsequently, a piston capable of uniformly applying a load of 0.3 psi was placed on the superabsorbent polymer. At this time, a piston produced to have an outer diameter slightly smaller than 25 mm so as to have no gap with the inner wall of the cylinder and to move freely up and down was used. Then, the weight W₅(g) of the device thus prepared was measured. Subsequently, a glass filter with a diameter of 90 mm and a thickness of 5 mm was placed inside a petri dish with a diameter of 150 mm, and a 0.9 wt% physiological saline solution was poured into the petri dish. At this time, the physiological saline solution was poured until the liquid surface of the physiological saline solution became level with the top surface of the glass filter. Then, one sheet of filter paper with a diameter of 90 mm was placed on the glass filter. Subsequently, the prepared device was placed on the filter paper so that the superabsorbent polymer in the device was allowed to swell by the physiological saline solution under load. After 5 minutes, residual liquid was removed using a vacuum pump. At this time, residual liquid not absorbed between the swollen superabsorbent polymer particles was removed.

Thereafter, the weight W₆(g) of the device containing the superabsorbent polymer was measured. Using the weight measured in this way, the 5-minute Gel-Vacuum AUL was calculated according to the following Equation 4, and the results are shown in Table 4 below. [Equation 4] $5 - minute Gel - Vacuum AUL \left(g/g\right) = \left[{W}_{6}\left(g\right)-{W}_{5}\left(g\right)\right] / {W}_{0} \left(g\right)$

In said Equation 4, W₀(g) is the initial weight (g) of the superabsorbent polymer, W₅(g) is the sum of the weight of the superabsorbent polymer and the weight of the device capable of applying a load to said superabsorbent polymer, and W₆(g) is the sum of the weight of the superabsorbent polymer measured after allowing the superabsorbent polymer to absorb physiological saline for 5 minutes under a load (0.3 psi) and removing the residual liquid with a vacuum device, and the weight of the device capable of applying a load to said absorbent polymer.

**[Table 4]**

| Category | Physical properties of base resin | | | Physical properties of superabsorbent polymer | | | | |
|---|---|---|---|---|---|---|---|---|
| | Entangl ement ratio (%) | Surface area to actual volume ratio (mm⁻¹) | CRC (g/g) | CRC (g/g) | 0.9 AUL (g/g) | GBP (darcy) | Vortex (sec) | 0.3 Gel-vac @ 5 min AUL (g/g) |
| Example 2-1 | 76.8 | 44 | 37.5 | 29.5 | 20.3 | 55 | 27 | 22.6 |
| Example 2-2 | 72.1 | 41 | 39.2 | 30.1 | 19.1 | 46 | 31 | 21.8 |
| Example 2-3 | 68.2 | 37 | 41.5 | 31.8 | 19.4 | 55 | 34 | 21.2 |
| Example 2-4 | 65.4 | 35 | 44.1 | 33.6 | 18.6 | 38 | 33 | 20.7 |
| Example 2-5 | 61.4 | 35 | 45.3 | 34.0 | 18.0 | 34 | 34 | 20.3 |
| Example 2-6 | 69.3 | 39 | 40.5 | 30.6 | 19.8 | 51 | 30 | 21.3 |
| Example 2-7 | 66.2 | 36 | 43.2 | 32.7 | 19.1 | 43 | 31 | 20.9 |
| Example 2-8 | 61.4 | 35 | 46.7 | 34.3 | 18.0 | 40 | 33 | 20.1 |
| Example 2-9 | 77.1 | 46 | 36.5 | 28.5 | 19.3 | 43 | 25 | 23.5 |
| Example 2-10 | 76.3 | 48 | 38.2 | 29.8 | 18.4 | 41 | 28 | 22.8 |
| Comparative Example 2-1 | 53.5 | 28 | 32.8 | 24.3 | 17.8 | 45 | 45 | 19.8 |
| Comparative Example 2-2 | 51.6 | 26 | 34.2 | 27.1 | 17.6 | 43 | 46 | 18.5 |
| Comparative Example 2-3 | 50.1 | 22 | 39.7 | 29.5 | 17.2 | 33 | 48 | 18.0 |
| Comparative Example 2-4 | 49.3 | 20 | 46.2 | 32.2 | 16.7 | 30 | 52 | 17.3 |
| Comparative Example 2-5 | 58.9 | 32 | 32.2 | 26.8 | 16.8 | 32 | 45 | 19.5 |

When a hydrogel polymer is prepared using a specific thermally decomposable internal crosslinking agent in a polymerization step, the base resin can have an appropriate surface area to actual volume ratio, and accordingly, the final resin can achieve an appropriate internal crosslinking degree, thereby exhibiting excellent absorption properties, particularly a fast absorption rate under pressure, while also exhibiting excellent process stability.

Here, a higher entangled ratio in the base resin particles means that more particles having high gel strength have been subjected to significant shear in a chopper, and in this case, the absorption rate can be further improved due to a high surface area to actual volume ratio.

Meanwhile, in the Comparative Examples using a conventional internal crosslinking agent without including a thermally decomposable internal crosslinking agent, the absorption rate was decreased compared to the Examples, and the absorbency under load was significantly decreased.

## Claims

1. A method for manufacturing a superabsorbent polymer comprising:
a step of forming a hydrogel polymer by polymerizing a monomer mixture comprising an acrylic acid-based monomer having acidic groups at least partially neutralized and a thermally decomposable internal crosslinking agent;
a step of forming base resin particles by coarsely pulverizing, drying, pulverizing, and classifying the hydrogel polymer; and
a step of crosslinking a part of the surface of the base resin particles by heat-treating the base resin particles in the presence of a surface crosslinking agent,
wherein the thermally decomposable internal crosslinking agent is an aliphatic cyclic epoxy-based compound comprising an ester bond within the molecule or an epoxy-based compound comprising a disulfide bond within the molecule.

2. The method for manufacturing the superabsorbent polymer according to Claim 1, wherein the thermally decomposable internal crosslinking agent is at least one selected from the group consisting of bis(3,4-epoxycyclohexylmethyl)adipate, diglycidyl 1,2-cyclohexanedicarboxylate, 3,4-epoxycyclohexylmethyl-3,4-epoxycyclohexane carboxylate, and bis(4-glycidyloxyphenyl)disulfide.

3. The method for manufacturing the superabsorbent polymer according to claim 1, wherein the thermally decomposable internal crosslinking agent is included in an amount of 100 ppmw to 10,000 ppmw based on the weight of the acrylic acid-based monomer.

4. The method for manufacturing a superabsorbent polymer according to claim 1, further comprising a foaming agent in the polymerization step.

5. The method for manufacturing the superabsorbent polymer according to claim 1, wherein the coarsely pulverizing step is performed by coarsely pulverizing the hydrogel polymer using a chopper comprising a perforated plate having a hole size of 16 mm or less and an opening ratio of 60% or less.

6. The method for manufacturing the superabsorbent polymer according to Claim 1, wherein the coarsely pulverizing step is performed at a chopper load of 35 to 55 A.

7. The method for manufacturing a superabsorbent polymer according to claim 1, wherein the crumb particles that do not pass through a 9.50 mm sieve according to ASTM E11 among the coarsely pulverized hydrogel polymer have a bulk density of 0.7 kg/m³ or more.

8. The method for manufacturing a superabsorbent polymer according to claim 1, wherein the base resin particles have a surface area to actual volume ratio of 35 mm⁻¹ or more.

9. The method for manufacturing the superabsorbent polymer according to Claim 1, wherein the superabsorbent polymer has a centrifuge retention capacity according to EDANA WSP 241.3 of 28 to 50 g/g.

10. The method for manufacturing the superabsorbent polymer according to Claim 1, wherein the superabsorbent polymer has a 0.9 psi absorbency under load according to EDANA WSP 242.3 of 15 to 30 g/g.

11. The method for manufacturing the superabsorbent polymer according to Claim 1, wherein the superabsorbent polymer has an absorption rate according to a vortex method of 40 seconds or less.

12. The method for manufacturing the superabsorbent polymer according to Claim 1, wherein the superabsorbent polymer has a 0.3 psi Gel-Vacuum AUL (5 min) of 20 g/g or more.
